Europäisches Patentamt

European Patent Office

Office européen des brevets

(11) Publication number: 0 263 439
A2

# EUROPEAN PATENT APPLICATION

(21) Application number: 87114366.5

(22) Date of filing: 01.10.87

(51) Int. Cl.4 C21D 9/60 , H05B 6/02

(30) Priority: 08.10.86 IT 1255386

(43) Date of publication of application:
13.04.88 Bulletin 88/15

(84) Designated Contracting States:
AT BE CH DE ES FR GB GR LI LU NL SE

(71) Applicant: S.A.M.P. S.p.A. Meccanica di
Precisione
Via Calzoni 2
I-40128 Bologna(IT)

(72) Inventor: Scotti, Roberto
Via Romana 63
I-28047 Oleggio (Novara)(IT)

(74) Representative: Porsia, Attilio et al
c/o Succ. Ing. Fischetti & Weber Via Caffaro
3
I-16124 Genova(IT)

(54) Electromagnetic induction furnace for the thermic treatment of wires.

(57) The wire is moved axially at a suitable speed by external means, such as for example the means for collecting the annealed wire, is passed around preferably idle pulleys so as to form in contact therewith closed loops or turns one flight of which is passed through a window in the toric core of a transformer which generates a magnetic flux by means of a feeding primary circuit. Said wire loops constitute, substantially, the secondary circuit of said transformer and are heated due to the Joule effect by the current induced by the electro-magnetic flux generated by said transformer. Since the secondary of said transformer is shortcircuited, said transformer needs very low electric voltages at the secondary in order to produce the power required for the treatment. A plurality of loops or turns of wire may be arranged in parallel to each other to reduce the electric voltage required for the thermal treatment of said wire, so as to achieve high working speeds without exceeding the voltage limits established by the present safety regulations. A suitable winding method permits to concentrate the heating electric power in the flight of wire extending between two successive pulleys and passing through the window in the core of the induction transformer. Means are described for maintaining the temperature in the pulleys substantially uniform, and other means are described for ensuring a suitable tractive force on the wire. The adjustment of the electric voltage in the primary circuit of the induction transformer permits the furnace to operate in combination with variable-speed wiredrawing machines, while a grounded stainless steel screen interposed between the primary and the secondary of said transformer, with no formation of turns, grants the safety to the operator. This solution may be used either with single-wire and multiple-wire systems, while the variation in the number of the turns of wire in series or in parallel permits the use of the same electric voltage for different wires moved at the same speed, thus reducing the electric power requirements.

Fig. 1

## "Electromagnetic induction furnace for the thermic treatment of wires"

This invention relates to an electric furnace for annealing a wire from any treatments, such as drawing, that have reduced its flexibility and plasticity. In the conventional furnaces, wire is heated due to the Joule effect by inducing electric current thereinto by means of pulleys which, in turn, are connected to the feeding electric source through collector rings and brushes. These brushes, due to the considerable electric power to be delivered, cause considerable friction on the moving members and require the pulleys around which the wire is passed to be power driven. Moreover, the tractive force on the wire is hardly maintained within the constant and desired limits, and the system requires the use of control devices of complicate construction and often of poor realibility.

The invention aims to overcome these and other disadvantages by providing a furnace of relatively simpler construction, the features and advantages of which will be apparent from the following description of a preferred embodiment thereof, shown by way of non-limiting example in the figures of the accompanying two sheets of drawings, wherein:

Figure 1 is a diagrammatic and partly perspective view of a possible embodiment of the furnace of the invention;

Figure 2 shows a diagram of the length-to-temperature relation in a wire treated in the furnace;

Figure 3 shows an electric circuit equivalent to a loop or turn of the wire being treated in the furnace;

Figure 4 is a diagrammatic view of a modified embodiment of the furnace designed to effect the treatment of a single wire or a single group of wires;

Figure 5 shows a diagram of the length-to-temperature relation in a wire that is being treated, considering the initial heating and final cooling of said wire;

Figure 6 shows a diagram of the desired longitudinal tractive force acting on the wires treated in the furnace according to the invention;

Figure 7 shows a diagram of the relation between the length of a wire and the diameter of the turnround pulleys for said wire;

Figure 8 is a partial and axially sectioned view of one of the pulleys for the wire, used in the furnace of the invention.

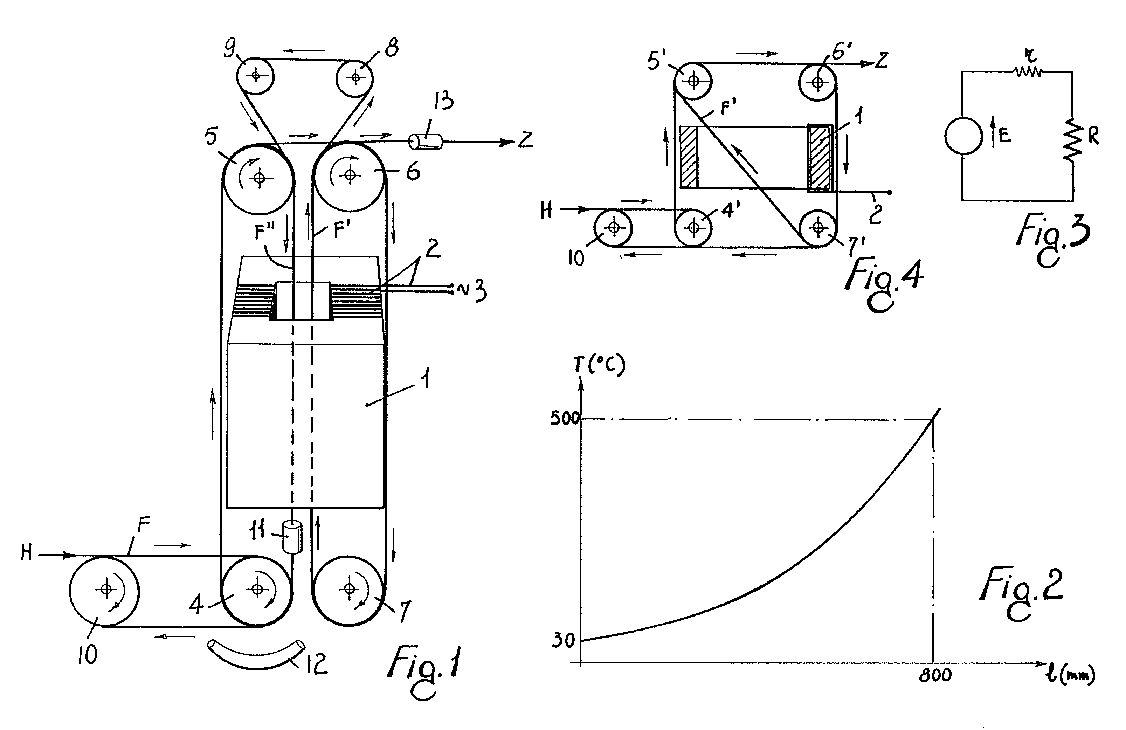

In figure 1, the numeral 1 indicates the toric core of a transformer of suitable size, said core having wound thereon turns of wire 2 forming the primary circuit of said transformer and fed from a suitable electric source indicated at 3. The numerals 4-5-6-7-8-9 indicate turnround pulleys for the wire to be treated; said pulleys, according to a peculiarity of the invention, may be idle. A tractive ring 10 is arranged upstream of the system being discussed. The wire F coming from H is wound a plurality of times around the ring 10 and pulley 4 so as to form something like a flat driving-belt. The wire is then wound clockwise a plurality of times around the pulleys 4-5-6-7-4 so as to form a ring having therewithin said core 1 without absolutely interferring with said core. In this annular trajectory of the wire there will be no appreciable induction of the electromagnetic flux generated by the core 1. However, a second flat belt is thus formed to drive the idle pulleys of the furnace. At the pulley the wire is passed successively around the pulleys 7-6-8-9-5-4, with formation of two turns of wire F'-F" which are passed through the hollow of the wore 1 without interferring with the latter and which are suitably spaced apart (see below). These lengths of wire F'-F" constitute closed loops through the contact with the respective pulleys 7-6 and 4-5 and through the various flights of wire between these pulleys, arranged on the outer side of the transformer core 1. Said pulleys are made of suitable material, for example, stainless non-magnetic steel. From the outlet pulley 4, the wire to be passed through the window of the core 1 is passed clockwise a plurality of times around the pulleys 4-5-6-7, whereby the length of wire F" passed ultimately through said window, that is the hottest length and is to be treated gently, will be independent from any variation in the tractive force downstream of the furnace. Upon coming out of the window of the core 1, the length of wire F" may be cooled abruptly by means of water vaporization within a unit 11. This permits to reduce the temperature at the contacting areas between the pulley 4 and wire F", which is particularly advantageous in case of tin-coated wire. Said pulley 4 may be cooled by water vaporization by means of a conventional unit 12, particularly when the furnace is used for the thermal treatment of copper wire. The wire, annealed and cooled as mentioned above, is passed around the pulleys 4-5-6, moves away from the latter pulley as indicated at Z and may be dried by eliminating the moisture thereon by passing the wire through a unit IS into which, for example, a heated gas may be injected.

An electromotive force $E = KfO$ max is induced on each loop or turn F'-F" of the secondary circuit of said induction transformer, "f" being the frequency in the primary, 0 max the maximum value of the flux, and K a proportionality factor depending on the wave-form of $O(t)$. Figure 3 shows the equivalent electric circuit of each of the turns F'-F". The electromotive force "E" collected on each turn is subdivided on two resistances. On the resistance "r" corresponding to the various flights of wire outside the core 1, which has a very low value in that it is formed by a plurality of wires in parallel and, therefore, it absorbs a small fraction of "E". The wires outside the core 1 involve a small variation of temperature, and it is possible to calculate how many turns are needed in order that said fraction of "E" equals a pre-established value and, therefore, in order that the outer temperature does not exceed a given value.

Finally, the electromotive force "E" is subdivided on the resistance "R" corresponding to the wire F'-F" of the turns passed through the window of the core 1. Since said wire is a single wire, said resistance "R" has a very high value and it absorbs most of said electromotive force "E", with resulting heating of said wires F'-F" due to the Joule effect. The resistance "R" increases with the increasing of temperature, which entails a decrease in the absorbed power if E is maintained constant ($P = E^2/R$). This system tends to reach a given constant running temperature and, therefore, is a steady state system. It is to be noted that the secondary circuit produces a flux which changes in the course of time, and which is not thoroughly linked with the primary. This is to be taken into account upon calculating the corresponding leakage reactance at the secondary. Moreover, the presence of magnetic materials is to be avoided at the area concerned with the leakage flux, and the presence is to be avoided as well of any loop-forming conductor permitting the circulation of induced currents. The movement of the wires F'-F" displays its influence in several ways: through the power required for the desired heating; through the temperature distribution along the wire, which affects the resistance of said wire; through the necessity to assure a good contact between wire and pulley and, therefore, a suitable tractive force on the wire, to permit the loops to close. The geometry of the winding as exemplified in figure 1, finally, affects the required tension.

The power input of the furnace is calculated as follows: $P = C_\gamma S \Delta T$, wherein "C" is the specific heat of the wire (cal/Kg °C); is the density (Kg/m$^3$); "S" is the sectional area of the wire (m$^2$);$\Delta$ T is the desired temperature differential (°C). The distribution of the temperature along the wire is calculated as follows: once the operative voltage has been established, $I = P/V$ is calculated;$\Delta$ T is divided into "n" parts, assuming "n" has a very large value ($\Delta T = \Delta T/n$). This is equivalent to the division of "P" into "n" parts ($P = KT$) and "v" into "n" parts ($P = VI$, I being constant). The initial small elementary wire has an initial temperature T and a final temperature T + T. It is assumed that the temperature is $(T_0 + \Delta T_1)/2$, which can be assumed if "n" is very large. The resistance $R = V/I$ is calculated of the small elementary wire and then the length of said elementary wire, compatible with said resistance. This method permits to find the length-temperature diagram and can be implemented easily with a computer. The diagram is shown in figure 2. Since the wire expands with temperature, said wire should have approximately the same temperature at all the pulleys.

By taking into account what discussed above and the equivalent circuit of figure 3, it will be possible to size as desired the distribution of the temperature and to contruct furnaces having one, two or more loops or turns, as shown diagrammatically in the modification of figure 4. The operative voltage may also be limited as desired by increasing the number of turns traversing the window of the core 1, so as to reduce the value of "R" in the circuit of figure 3.

The system of the invention, by distributing the electric contacts at many points between the wire and turnround pulleys, facilitates the passage of current and constitutes, under this regard, a redundant system, especially if formed of many turns. Anyway, a proper contact is ensured if the system does not cause continuous variations of tractive force on the wire during the normal running conditions.

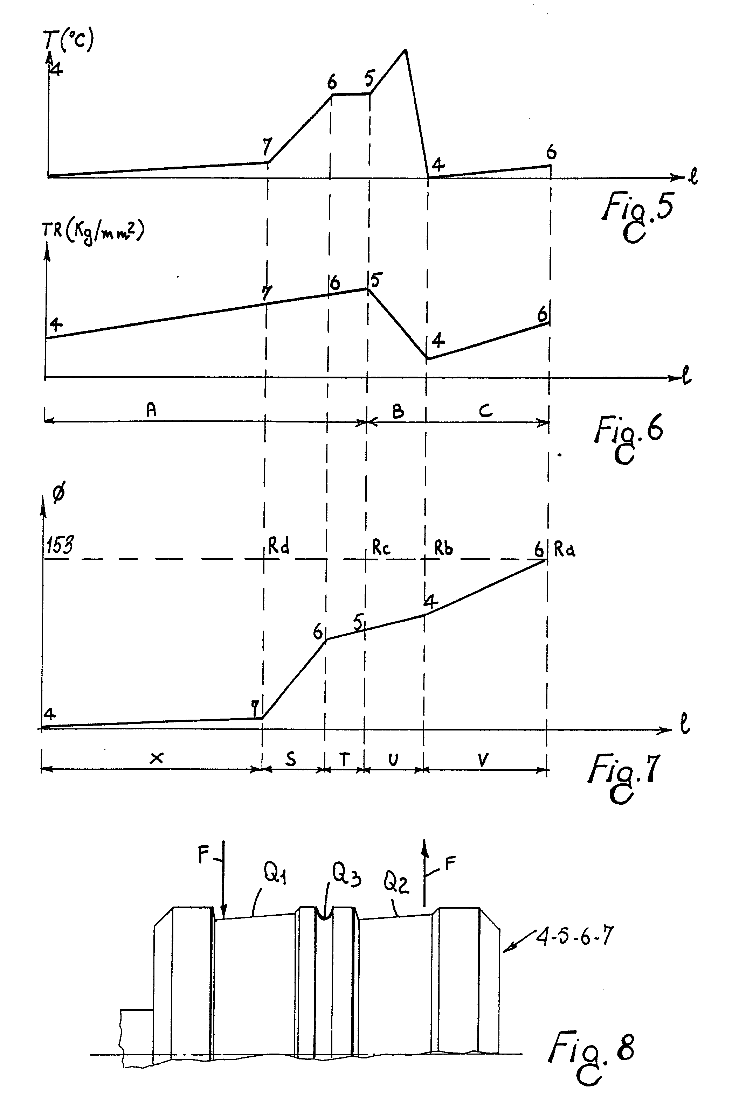

In the thermal treatment of a wire, two causes of elongation of the wire will be encountered. One of these causes is the thermal expansion due to the Joule effect heating. Reference is to be made now to the space-temperature diagram of figure 2, which is completed as in figure 5 by additionally taking into account the initial heating and final cooling. The numerals in figure 5 are the reference numerals of the pulleys in figure 1. The diagram of thermal elongations is the same, plotted on a different scale. The second of said causes of elongation is the tractive force exerted on the wire for advancing it. Under this respect, the diagram of the desired tractive forces can be advantageously plotted, as in figure In case of annealing of copper wires, the tractive force on the issuing wire Z (figure 1°, ensured by external means such as, for example, a dancer roll (not shown), is assumed to be Kg/mm2. On proceeding backward upstream, the tractive force should decrease to about 2 Kg/mm2 at the annealing area, so as to avoid any stretching of the hot wire, whereas the tractive force should be stronger on the pulleys 5-6 at the end of the first loop. This tractive force is assumed to be 10 Kg/mm2 at the pulley 5 (slightly lower than that at the pulley 6). The tractive force then decreases on proceeding upstream, to reach again 5 Kg/mm2 at the pulley 4. The elongations due to the tractive force are plotted on the tension-% elongation diagram concerning the raw wire (stretch A in figure 6), the hot wire (stretch B), and the annealed wire (stretch C). The sum is then effected of the elongations due to the tractive force and the elongations due to thermal expansion and thus it may be established theoretically a range of diameters for the pulleys which are suitable to maintain the desired tractive force (figure 7), even if such a range is practically scarcely useful because the parameters shall be adjustable. Practically, the range of diameters is calculated while constructing pulleys with a taper whose diameter increases towards the downstream path of travel of the wire, or pulleys provided with grooves or depressions whose bottom is tapering is said direction, as shown in figure 8 where Q1 and Q2 indicate the tapering depressions or grooves engaged by the incoming and outgoing wire and Q3 indicates an intermediate depression or groove engaged by the wire which gets through the window of the induction core 1 (see below). The adjustment of the tractive force is effected by regulating the operative diameter of the wire on the pulley at the following areas:

a) At the area Z where the treated wire is issued, a wire-guide (not shown) establishes the operative diameter at the maximum possible diameter. The rocker roller operating downstream of the issuing station Z maintains the tractive force at the value of 5 Kg/mm2 whereby the wire will move to a calculated diameter. If the tractive force increases, the taper of the groove Q2 creates on the wire a reaction which displaces said wire towards the smaller diameters, whereas, on the other hand, if the tractive force decreases, the wire is displaced towards the larger diameters because said wire-guide urges it in that direction.

b) On proceeding upstream, it is assumed to encounter progressively decreasing diameters. The smaller-diameter pulley restrains the wire which upstream is subjected to a smaller tractive force, and is thus relieved. If the smaller diameter may be fixed at a suitable value on the pulley in engagement with the wire on completion of the annealing step, the tractive force will behave as shown by the stretch C in figure 6. This may be done either by means of a micrometric wire-guide, or by establishing the wire operating diameter by means of a groove.

c) The second adjustment is effected immediately upstream of the pulley 5 before the beginning of the second turn F" of the wire being annealed. By increasing the diameter of the operating portion of said pulley, in comparison with the constant diameter discussed below, a higher tractive force will be present in the stretch A of figure 6. If the taper has a linear outline, this adjustment may be strictly linked to the adjustment discussed at item b), on the basis of the resiliency characteristics of the hot wire. One adjustment is thus eliminated. Otherwise, similar results may be obtained by fixing the diameters at the initial and final annealing steps and maintaining the tapering grooves upstream and downstream, as shown in figure B.

d) The inlet diameter is fixed and is the same as the calculated diameter. This fixed point. since the initial stretch of the winding outside the core 1 (zone X in figure 7) is at low temperature. may be displaced at the end of said zone X. In figure 7, these adjustment spots are indicated at Ra,Rb,Rc,Rd.

It is known that when electric current flows through wires in the same direction, said wires actract each other. In the furnace of this invention the wires F' - F" should besuitably spaced apart. In the system of the invention, moreover, a force tends to space apart the turns or loops.

By varying the voltage across the primary of the core 1, the induced voltage is varied in each turn or loop of the secondary F'-F". This permits to match the voltage to the speed of the wire, which is variable in the course of time. Upon a change in the speed, the voltage across the primary is also to be changed according to the law $V = K\sqrt{v}$, wherein "v" is the speed of advance of the wire to be treated. In fact, $P = V^2/R = K1v$. K and K1 are constant and "P" is the required power. However, since the voltage across the secondary is variable also with the frequency proportionally, the operative frequency can be interlinked with the root of speed. This may be convenient if the primary regulation is effected by means of the modern variable-frequency inverters (the voltage adjustment circuit is not required).

The core 1 and primary circuit 2 are prevented from contacting by a housing (not shown in the drawings) made of stainless steel and connected to ground. The formation of turns will be avoided by making an insulating material segregation at the window. The apparatus described above may be used as well for the construction of multi-wire furnaces. In fact, the same principle is valid, provided that the corresponding power is calculated and the operative voltage is reduced because there will be a plurality of turns in parallel. In effect, this constitutes a great advantage in connection with safety. In order to avoid undesired attraction forces, the wires being treated should be suitably spaced apart, while the various turns or loops of a single wire may contact each other. Only the contact between the wires within the window of the core 1 shall be avoided.

The apparent electric power, when a furnace is to be dimensioned for a series of wires, depends upon the following factors:
-maximum speed of the thinner wire; this parameter affect the operative voltage;
-maximum current in the larger wire.

Sometimes it is necessary to limit the operative speed in the larger wires so as not to reach too high current values. In these cases, the method of the invention permits to overcome the problem. It will only require to arrange a plurality of larger wires in series, as shown diagrammatically in figure 4, while using suitable insulating surfaces on the pulleys.

**Claims**

1. An electric furnace for the thermal treatment of axially moving wires, either in single or multiple arrangement, characterized in that the electric power is transmitted to the wire to be treated by making it pass through the window of a magnetic toric core (1) of a transformer having a suitable power and which by means of its primary circuit (2) will become the site of a magnetic flux which is variable in the course of time, said wire length or lengths (F'-F") being closed to form shortcircuited turns or loops by contacting the surface of the respective turnround pulleys (4-5-6-7).

2. An electric furnace according to the preceding claim, wherein the wire to be treated is caused to change direction according to such patterns that the wire or wires passed through the window of the core (1) of the inducing transformer will have such parameters of total length or section as to display an equivalent electric resistance (R) of much higher value than the resistance (r) of the wires arranged outside said window, whereby the wire or wires (F'-F") passed through said induction window will become substantially the site of heating.

3. An electric furnace according to the preceding claims, wherein the wire to be treated is caused to change direction according to patterns of the type shown in figure 1 of the accompanying drawings, so that the window of the electromagnetic induction core (1) is traversed by two oppositely-moving wires (F'-F"), while on the outer side of said window there will be gathered a plurality of wires so as to display altogether an equivalent resistance (r) of very limited value.

4. An electric furnace according to the preceding claims, wherein the pulleys (4-5-6-7) on which the wire is passed are of the idle type, are made preferably of non-magnetic stainless steel and are shaped so that the wire will be wound on them a plurality of turns before passing through the window of the electromagnetic induction apparatus (1) and after coming out of said apparatus, whereby said wire may be advanced by the tractive action of other machines associated with the furnace, for example by the action of the winding machine so as to take advantage of the wire itself as a set of flat belts for driving said pulleys.

5. An electric furnace according to the preceding claims, wherein means is provided whereby the tractive action on the wire is adjusted by forming the pulleys with a taper (Q1-Q2) increasing towards the downstream side, by fixing the diameters (Q3) of the areas on the pulleys correspondingly to the beginning and the end of the annealing cycle, so as to ensure a pre-established and constant elongation of the wire at that area.

6. An electric furnace according to the preceding claims, wherein the dimensioning of said furnace for a given range of wires may be optimized by using as a variable, instead of the length of the wire, the number of the loops or turns in series or in parallel through the window of the induction apparatus (1).

Fig.1

Fig.4

Fig.3

Fig.2

0 263 439

Fig. 5

Fig. 6

Fig. 7

Fig. 8